# EUROPEAN PATENT APPLICATION

(11) **EP 2 352 260 A1**
(43) Date of publication of application: **03.08.2011**
(21) Application number: 09822997.4
(22) Date of filing: 08.05.2009
(51) Int. Cl.: H04L 12/56

(54) **A METHOD, DEVICE AND SYSTEM FOR PERFORMING NETWORK ADDRESS TRANSLATION**

(30) Priority: 30.10.2008 CN 200810171288
(71) Applicant: Huawei Technologies Co., Ltd., Shenzhen, Guangdong 518129 (CN)
(72) Inventor: ZHU, Ning, Guangdong 518129 (CN)
(74) Representative: Epping - Hermann - Fischer
(86) International application number: PCT/CN2009/071703
(87) International publication number: WO 2010/048804

(57) **Abstract**

The present invention relates to communication technologies, and discloses a method, a device, and a system for implementing Network Address Translation (NAT), so that a NAT type can be selected for a network interface flexibly. The method includes: receiving a NAT type setting message sent by a Media Gateway Control (MGC), where the NAT type setting message carries a NAT type preset for a network interface; setting the NAT type for the network interface according to the NAT type setting message; and performing a NAT operation according to the set NAT type when a NAT device corresponding to the network interface sends a packet from an internal network interface to an external network interface or from an external network interface to an internal network interface. The embodiments of the present invention are primarily applied in a Next Generation Network (NGN).

## Description

This application claims priority to Chinese Patent Application No. 200810171288.3, filed with the Chinese Patent Office on October 30, 2008 and entitled "METHOD, DEVICE AND SYSTEM FOR IMPLEMENTING NETWORK ADDRESS TRANSLATION", which is hereby incorporated by reference in its entirety.

### FIELD OF THE INVENTION

The present invention relates to the field of communication technologies, and in particular, to a method, a device, and a system for implementing Network Address Translation (NAT).

### BACKGROUND OF THE INVENTION

With rapid development of computer and communication technologies, using a public packet-based network to bear voice, data, images and other various services becomes a developing direction. The trend of service development and network convergence gives rise to Next Generation Network (NGN), the core of which is soft switch.

The structure of an NGN in the prior art mainly includes a Media Gateway (MG) and a Media Gateway Controller (MGC). The MGC is configured to manage call state and control bearer resources of the MG; and the MG is configured to convert the format of media streams. Besides, the MG is capable of NAT.

NAT refers to translating an internal private network address into an Internet Protocol (IP) address of an external public network. That is, when an internal node needs to communicate with the external network, the NAT function is applied on the gateway (such as MG in the NGN) to replace the internal address with the public address so that the address can be used normally in the external public network. The NAT function enables multiple computers to share the Internet connection, thus overcoming short supply of public IP addresses.

The NAT comes in several types: traditional NAT, bidirectional NAT or two-way NAT, and twice NAT. Traditional NAT can be classified into Basic NAT and Network Address Port Translation (NAPT). The NAT can also be classified into clone NAT, for example, full clone, restricted clone, port restricted clone, and symmetric NAT.

Taking the MG as an example, in order to implement the foregoing NAT function, it is necessary to maintain a NAT address mapping table on the MG. The address mapping table stores the NAT address mapping relations between the internal network addresses and the external network addresses. In the prior art, the NAT address mapping relations are generally stored in a NAT IP Route (NIPR) context.

When a network interface on the MG receives an IP packet and finds that a new NAT address mapping relation needs to be generated, the MG reports an event to the MGC. The event carries an internal network address and a mapping external network address. Additionally, the event may carry a destination address of the IP packet. The MGC may set the property of the NIPR context through a command such as ADD (ADD), MODIFY (MOD), or MOVE (MOV). The NAT address mapping relation is stored in the NIPR context. That is, the property of the NIPR context includes the relevant internal network address and external network address.

However, in the process of implementing the present invention, the inventor finds at least the following problems in the prior art:
When the MG receives an IP packet from the internal network interface and determines that it is necessary to perform NAT address mapping, if the type of the NAT to be implemented is uncertain, it is impossible to report the address to the MGC after mapping the source address of the IP packet to the external network address on the external network interface. In the prior art, the MG generally implements NAT address mapping of the network interface by supposing that the NAT is of a configured fixed type or a default type. However, the MG is unable to select the NAT type for the network interface flexibly as required.

### SUMMARY OF THE INVENTION

The embodiments of the present invention provide a method, a device and a system for implementing NAT, so that a NAT type can be selected for a network interface flexibly.

A NAT method provided in an embodiment of the present invention adopts the following technical solution.

A NAT method includes:
receiving a NAT type setting message sent by an MGC, where the NAT type setting message carries a NAT type preset for a network interface;
setting the NAT type for the network interface according to the NAT type setting message; and
performing a NAT operation according to the set NAT type when a NAT device corresponding to the network interface sends a packet from an internal network interface to an external network interface or from an external network interface to an internal network interface.

Another NAT method provided in an embodiment of the present invention adopts the following technical solution.

A NAT method includes:
generating a NAT type setting message; and
sending the NAT type setting message to an MG, where the NAT type setting message carries a NAT type preset for a network interface.

An MG provided in an embodiment of the present invention adopts the following technical solution.

An MG includes:
a receiving unit, configured to receive a NAT type setting message sent by an MGC, where the NAT type setting message carries a NAT type preset for a network interface;
a setting unit, configured to set the NAT type for the network interface according to the NAT type setting message; and
a NAT operating unit, configured to perform a NAT operation according to the set NAT type, when a NAT device corresponding to the network interface sends a packet from an internal network interface to an external network interface or from an external network interface to an internal network interface.

An MGC provided in an embodiment of the present invention adopts the following technical solution.

An MGC includes:
a message generating unit, configured to generate a NAT type setting message; and
a message sending unit, configured to send the NAT type setting message to an MG, where the NAT type setting message carries a NAT type preset for a network interface.

A NAT system provided in an embodiment of the present invention includes:
an MGC, configured to generate a NAT type setting message and send the NAT type setting message to an MG, where the NAT type setting message carries a NAT type preset for a network interface; and
the MG, configured to receive the NAT type setting message sent by the MGC, and set the NAT type for the network interface according to the NAT type setting message; and perform a NAT operation according to the set NAT type when a NAT device corresponding to the network interface sends a packet from an internal network interface to an external network interface or from an external network interface to an internal network interface.

With the method, device, and system for implementing NAT in the embodiments of the present invention, the MGC generates a NAT type setting message according to the requirement of the network interface, and the MG sets a NAT type for the network interface according to the message. Therefore, the MG can set the NAT type for the network interface flexibly according to the requirement of the network interface when the NAT device corresponding to the network interface sends a packet from an internal network interface to an external network interface or from an external network interface to an internal network interface.

### BRIEF DESCRIPTION OF THE DRAWINGS

To describe the technical solution under the present invention more clearly, the following outlines the accompanying drawings involved in the embodiments of the present invention. Apparently, the accompanying drawings outlined below are only about some of rather than all of the embodiments, and persons of ordinary skill in the art can derive other drawings from such accompanying drawings without creative effort.
FIG. 1 is a schematic diagram showing a NAT system according to a first embodiment of the present invention;
FIG. 2 is a flowchart of a NAT method according to a second embodiment of the present invention;
FIG. 3 is a flowchart of a NAT method according to a third embodiment of the present invention;
FIG. 4 is a schematic diagram showing an MG according to a fourth embodiment of the present invention;
FIG. 5 shows a structure of an MG according to the fourth embodiment of the present invention; and
FIG. 6 is a schematic diagram showing an MGC according to a fifth embodiment of the present invention.

### DETAILED DESCRIPTION OF THE EMBODIMENTS

The following detailed description is given with reference to the accompanying drawings in order to provide a thorough understanding of the present invention. Evidently, the drawings and the detailed description are only part of rather than all of embodiments of the present invention, and the embodiments are illustrative in nature rather than exhaustive. All other embodiments, which can be derived by those skilled in the art from the embodiments given herein without creative effort, shall fall within the protection scope of the present invention.

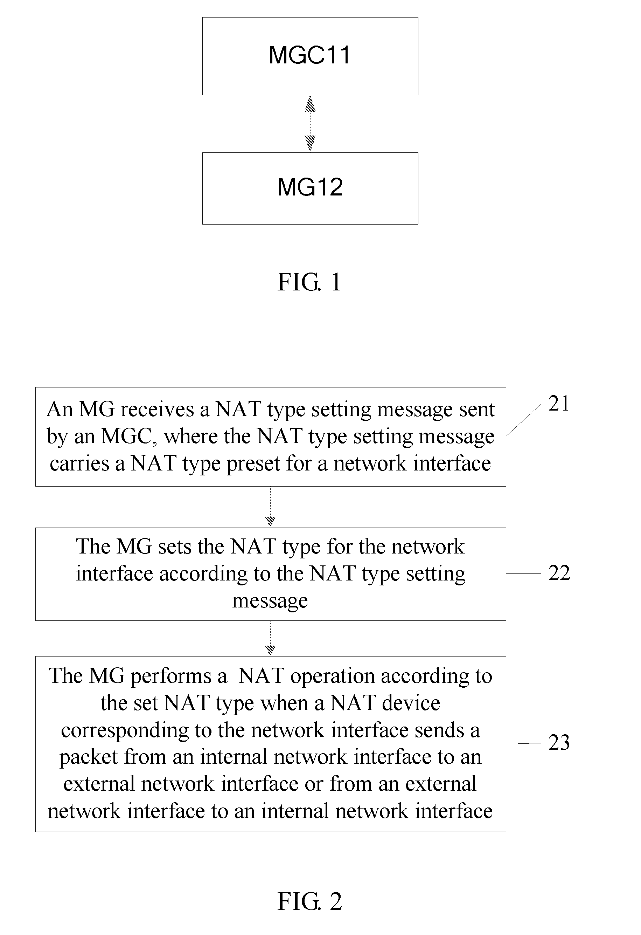

In order to select a NAT type for a network interface according to the requirement of the network interface, a first embodiment of the present invention provides a system for implementing NAT. As shown in FIG. 1, a NAT system provided in the first embodiment of the present invention includes:
an MGC 11, configured to generate a NAT type setting message according to a preset policy or information obtained from another network entity, and send the NAT type setting message to an MG 12, where the NAT type setting message carries a NAT type preset for a network interface; and
the MG 12, configured to receive the NAT type setting message sent by the MGC 11, and set the NAT type for the network interface according to the NAT type setting message; and perform a NAT operation according to the set NAT type when a NAT device corresponding to the network interface sends a packet from an internal network interface to an external network interface or from an external network interface to an internal network interface.

The NAT type include: basic NAT, NAPT, bidirectional NAT, or twice NAT. When the NAT type is basic NAT, NAPT, or bidirectional NAT, the NAT type setting message further carries clone type setting information of the NAT type, for example, full clone, restricted clone, port restricted clone, or symmetric NAT.

In actual applications, a NAT device may have one external network interface and at least one internal network interface. In this embodiment, the NAT type is set on the User Equipment (UE) that represents the network interface, namely, on the UE that represents the external network interface or the UE that represents the internal network interface.

If the NAT type is set on the UE that represents the external network interface, the NAT type setting message may further carry internal network interface property information. If the NAT type is set on the UE that represents the internal network interface, the NAT type setting message may further carry external network interface property information.

If the NAT type is set on the UE that represents the external network interface of the NAT device, when a packet received from the internal network interface needs to be sent to the external network through the external network interface, the NAT needs to be performed according to the NAT type and the existing NAT mapping table. For the packet received on the external network interface, it is also necessary to judge, according to the NAT type and the existing NAT mapping table, whether to forward the packet to the internal network interface and how to implement NAT mapping.

If the NAT type is set on the UE that represents the internal network interface of the NAT device, when a packet received from this internal network interface and other internal network interfaces of the NAT device needs to be sent to an external network through the external network interface of the NAT device, the NAT needs to be performed according to the NAT type and the existing NAT mapping table. For the packet received on the external network interface of the NAT device, it is also necessary to judge, according to the NAT type and the existing NAT mapping table, whether to forward the packet to the internal network and how to implement the NAT mapping.

Through the NAT system provided in the first embodiment of the present invention, the MGC generates the NAT type setting message according to the requirement of the network interface, and the MG sets the NAT type for the network interface according to the message. Therefore, the MG can set the NAT type for the network interface flexibly according to the requirement of the network interface when a packet is sent from or to the network interface.

As shown in FIG. 2, an NAT method provided in the second embodiment of the present invention includes the following steps:
Step 21: The MG receives a NAT type setting message sent by an MGC, where the NAT type setting message carries a NAT type preset for a network interface.

The NAT type include: basic NAT, NAPT, bidirectional NAT, or twice NAT. When the NAT type is basic NAT, NAPT, or bidirectional NAT, the NAT type setting message further carries clone type setting information of the NAT type. Besides, if the NAT type is set on the external network interface, the NAT type setting message may further carry internal network interface property information. If the NAT type is set on the internal network interface, the NAT type setting message may further carry external network interface property information.

In the embodiments of the present invention, new properties may be added in an existing H.248 packet or an extended H.248 new packet. The NAT type and the NAT clone type carried in the NAT type setting message may be expressed in the following way. Supposing that the NAT type setting information is set on the UE that represents the external network interface of NAT, the NAT type and the NAT clone type carried in the NAT type setting message are defined as follows:
(1) property name: NatType (0x0001), this parameter indicates the NAT type expected by the network interface. The property is set on a localcontrol descriptor of the UE that represents the interface, and the data type of this property is an enumerate type. Generally, the default value of this parameter is NAPT (0x02). Table 1 shows allowable values of this parameter:

**Table 1**

| | |
|---|---|
| BaNAT (0x01) | Basic NAT |
| NAPT (0x02) | Network Address Port Translation |
| BiNAT (0x03) | Bidirectional NAT |
| TwNAT (0x04) | Twice NAT |

(2) property name: ConeType (0x0002), this parameter indicates the NAT clone type expected by the network interface. The property is set on a localcontrol descriptor of the UE that represents the interface, and the data type of this property is an enumerate type. Generally, the default value ofthis parameter is full (0x01). Table 2 shows allowable values of this parameter:

**Table 2**

| | |
|---|---|
| Full (0x01) | full clone |
| Res (0x02) | Restricted Clone |
| PoRes (0x03) | Port Restricted Clone |
| Sym (0x04) | symmetric NAT |

Besides, the internal network interface property information carried in the NAT type setting message is intInterface(0x0003), which carries a list of the internal network interface names (or list of names of the UE that represents the interface). This property is set on a localcontrol descriptor of the UE that represents the interface, and the data type of this property is a string list. Through this property information, the packets that need to undergo NAT mapping can be filtered.

Step 22: The MG sets the NAT type for the network interface according to the NAT type setting message.

In this step, the MG resolves the NAT type setting message to obtain the NAT type preset for the network interface, stores the NAT information preset for the network interface, and sets the NAT type for the network interface.

If the extended protocol stipulates that the NAT type is set on the UE that represents the external network interface of NAT, the NAT type setting message further carries internal network interface property information. If the extended protocol stipulates that the NAT type is set on the UE that represents the internal network interface of NAT, the NAT type setting message further carries external network interface property information.

Step 23: The MG performs a NAT operation according to the set NAT type when a NAT device corresponding to the network interface sends a packet from an internal network interface to an external network interface or from an external network interface to an internal network interface.

For example, if the NAT type setting message received by the MG is: NAT type is BaNAT(0x01), and NAT clone type is full(0x01), it indicates that the NAT type expected by a network interface is basic NAT, and that the NAT clone type expected by the network interface is full clone type. Therefore, after receiving packets from the internal network interface, the MG maps the packets that come from the same IP address and port to the same external IP address and port. For a packet received by the external network interface, if the destination address is the external IP address and port already mapped, the packet is sent to the corresponding internal network interface.

If the NAT type setting message received by the MG is: NAT type is NAPT(0x02), and NAT clone type is Res(0x02), it indicates that the NAT type expected by a network interface is NAPT, and that the NAT clone type expected by the network interface is restricted clone type. Therefore, the MG maps different internal network addresses to different ports of the same external network IP address, and maps all packets that come from the same internal IP address and port to the same external IP address and port. Unlike the full clone NAT, an external network interface whose IP address is x can send a packet to an internal network interface only if the internal network interface has ever sent a packet to the external network interface whose IP address is x.

If the NAT type setting message received by the MG is: NAT type is NAPT(0x02), and NAT clone type is Sym(0x02), it indicates that the NAT type expected by a network interface is NAPT, and that the NAT clone type expected by the network interface is symmetric clone type. Therefore, the MG maps different internal network addresses to different ports of the same external network IP address, and generates two different NAT mapping relations after two packets are sent from the same internal address and port simultaneously and forwarded to different external network addresses.

Through the NAT method provided in this embodiment, the MG sets the NAT type for the network interface according to the NAT type setting message sent by the MGC. The MG can set the NAT type for the network interface flexibly according to the requirement of the network interface when a packet is sent from or to the network interface.

In the foregoing embodiment, the NAT type setting information is set on the UE that represents the external network interface of NAT. A similar implementation method is that: The NAT type setting information is set on the UE that represents the internal network interface of NAT. This implementation method is similar to the embodiment described above, namely, the NAT type and the clone type can be set, and the external network interface name can be set.

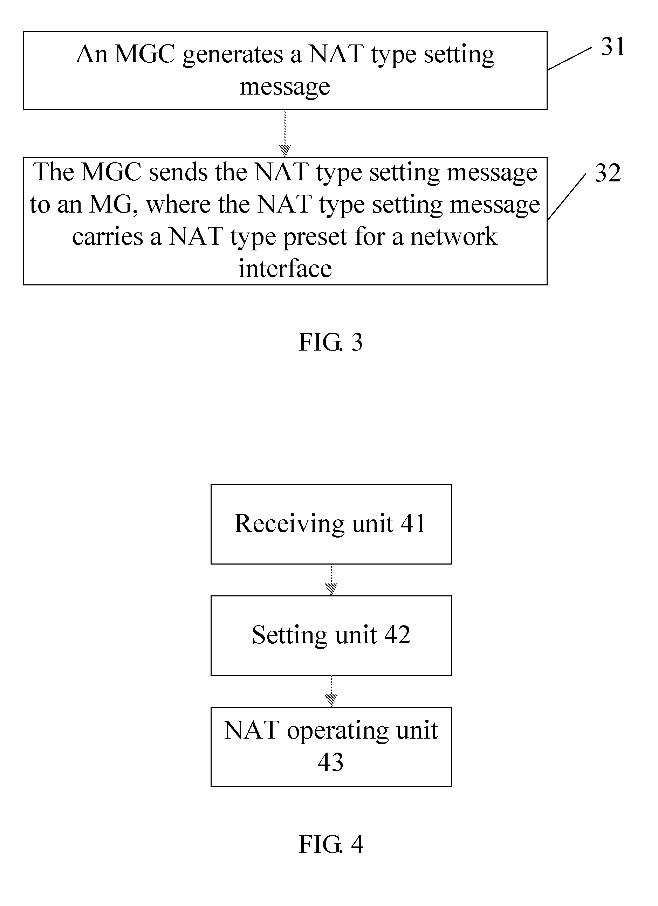

The third embodiment of the present invention provides a NAT method. As shown in FIG. 3, the flowchart includes the following steps:
Step 31: A NAT type setting message is generated according to a preset policy or information obtained from other network entities.
Step 32: An MGC sends the NAT type setting message to an MG, where the NAT type setting message carries a NAT type preset for a network interface.

Like the description in the second embodiment, the NAT type include: basic NAT, NAPT, bidirectional NAT, or twice NAT. When the NAT type is basic NAT, NAPT, or bidirectional NAT, the NAT type setting message further carries clone type setting information of the NAT type. Besides, if the NAT type is set on the external network interface, the NAT type setting message may further carry internal network interface property information. If the NAT type is set on the internal network interface, the NAT type setting message may further carry external network interface property information.

The NAT method provided in this embodiment of the present invention includes the following steps:
Step 41: The MG receives a NAT type setting message sent by the MGC, which requires the MG to set the NAT type for the interface as: NAT Type=0x02, Contype=0X02.
Step 42: The MG receives an IP packet. The IP packet received by the MG may be sent by the external network interface to the internal network interface, or from the internal network interface to the external network interface. Accordingly, the MG performs operations according to specific scenarios:
   Scenario 1: If the packet is sent by the external network interface to the internal network interface, the MG determines that the source address of the packet is x and the destination address is y; and determines that the internal network address "a" of the internal network interface A is mapped to address "y" on the NAT. The MG checks whether a packet is sent from the internal network address "a" to the external network address "x". If a packet is sent from the internal network address "a" to the external network address "x", the MG forwards the packet to the internal network interface A; if no packet is sent from the internal network address "a" to the external network address "x", the MG discards the packet.
   Scenario 2: When receiving a packet sent from the internal network interface to the external network interface, the MG checks whether the internal network interface has an available external network address mapped. If the internal network interface has an available external network address mapped, the MG forwards the packet to the external network address; if there is no available external network address mapped for the internal network interface, the MG maps the internal network interface to a new external network address of NAT, and forwards the packet to the new external network address.

Through the NAT method provided in the first embodiment of the present invention, the MGC generates the NAT type setting message according to the requirement of the network interface, and the MG sets the NAT type for the network interface according to the message. The MG can set the NAT type for the network interface flexibly according to the requirement of the network interface when a packet is sent from or to the network interface.

Persons of ordinary skill in the art should understand that all or part of the steps of the method under the present invention may be implemented by a program instructing relevant hardware. The program may be stored in a computer readable storage medium. When the program runs, the steps of the method specified in any of the embodiments above can be performed. The storage medium may be a magnetic disk, CD-ROM, Read-Only Memory (ROM), or Random Access Memory (RAM).

The fifth embodiment of the present invention provides an MG. As shown in FIG. 4, the MG includes: a receiving unit 41, a setting unit 42, and a NAT operating unit 43. The receiving unit 41 is configured to receive a NAT type setting message sent by an MGC, where the NAT type setting message carries a NAT type preset for a network interface; the setting unit 42 is configured to set the NAT type for the network interface according to the NAT type setting message; and the NAT operating unit 43 is configured to perform a NAT operation according to the set NAT type when a NAT device corresponding to the network interface sends a packet from an internal network interface to an external network interface or from an external network interface to an internal network interface.

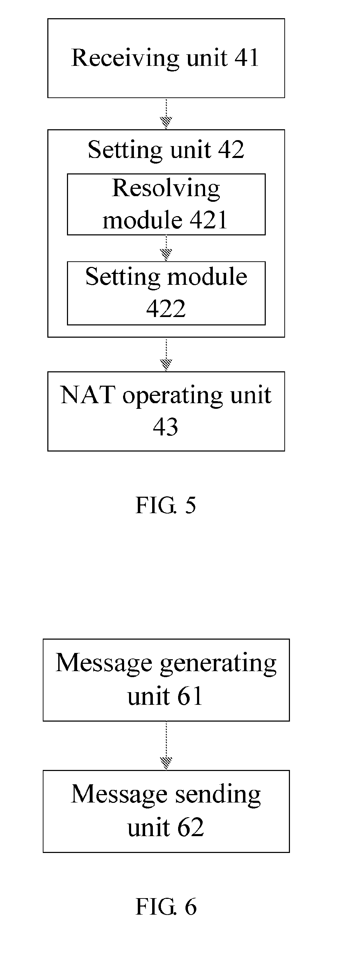

As shown in FIG. 5, the setting unit 42 includes:
a resolving module 421, configured to resolve the NAT type setting message and obtain the NAT type preset for the network interface; and
a setting module 422, configured to set the NAT type for the network interface.

In the fifth embodiment of the present invention, other information carried in the NAT type setting message is the same as the counterpart described in the second embodiment, and is not repeated here any further.

The MG provided in the fifth embodiment can set the NAT type for the network interface flexibly according to the requirement of the network interface when the NAT device corresponding to the network interface sends a packet from an internal network interface to an external network interface or from an external network interface to an internal network interface.

The sixth embodiment of the present invention provides an MGC. As shown in FIG. 6, the MGC includes:
a message generating unit 61, configured to generate a NAT type setting message according to a preset policy or information obtained from other network entities; and
a message sending unit 62 is configured to send the NAT type setting message to an MG, where the message carries a NAT type preset for a network interface.

In conclusion, with the method, device, and system for implementing NAT in the embodiments of the present invention, the MGC generates a NAT type setting message according to the requirement of the network interface, and the MG sets the NAT type for the network interface according to the message. Therefore, the MG can set the NAT type for the network interface flexibly according to the requirement of the network interface when the NAT device corresponding to the network interface sends a packet from an internal network interface to an external network interface or from an external network interface to an internal network interface.

The above descriptions are merely some exemplary embodiments of the present invention, but not intended to limit the scope of the present invention. Any modifications, variations, or replacement that can be easily derived by those skilled in the art shall fall within the protection scope of the present invention. Therefore, the protection scope of the present invention is subject to the appended claims.

## Claims

1. A Network Address Translation (NAT) method, comprising:
receiving a NAT type setting message sent by a Media Gateway Control (MGC), wherein the NAT type setting message carries a NAT type preset for a network interface;
setting the NAT type for the network interface according to the NAT type setting message;
and
performing a NAT operation according to the set NAT type when a NAT device corresponding to the network interface sends a packet from an internal network interface to an external network interface or from an external network interface to an internal network interface.

2. The NAT method according to claim 1, wherein:
the NAT type comprises: basic NAT, Network Address Port Translation (NAPT), bidirectional NAT, or twice NAT.

3. The NAT method according to claim 2, wherein:
when the NAT type is basic NAT, NAPT, or bidirectional NAT, the NAT type setting message further carries clone type setting information.

4. The NAT method according to claim 1, wherein: the setting of the NAT type for the network interface according to the NAT type setting message comprises:
resolving the NAT type setting message and obtain the NAT type preset for the network interface; and
setting the NAT type for the network interface.

5. The NAT method according to claim 1, wherein:
if the NAT type is set on a User Equipment (UE) that represents the external network interface of NAT, the NAT type setting message further carries internal network interface property information.

6. The NAT method according to claim 1, wherein:
if the NAT type is set on a User Equipment (UE) that represents the internal network interface of NAT, the NAT type setting message further carries external network interface property information.

7. A Network Address Translation (NAT) method, comprising:
generating a NAT type setting message; and
sending the NAT type setting message to a Media Gateway (MG), wherein the NAT type setting message carries a NAT type preset for a network interface.

8. The NAT method according to claim 7, wherein:
the NAT type comprises: basic NAT, Network Address Port Translation (NAPT), bidirectional NAT, or twice NAT.

9. The NAT method according to claim 8, wherein:
when the NAT type is basic NAT, NAPT, or bidirectional NAT, the NAT type setting message further carries clone type setting information of the NAT type.

10. A Media Gateway (MG), comprising:
a receiving unit (41), configured to receive a Network Address Translation (NAT) type setting message sent by a Media Gateway Controller (MGC), wherein the NAT type setting message carries a NAT type preset for a network interface;
a setting unit (42), configured to set the NAT type for the network interface according to the NAT type setting message; and
a NAT operating unit (43), configured to perform a NAT operation according to the set NAT type when a NAT device corresponding to the network interface sends a packet from an internal network interface to an external network interface or from an external network interface to an internal network interface.

11. The MG according to claim 10, wherein the setting unit comprises:
a resolving module (421), configured to resolve the NAT type setting message and obtain the NAT type preset for the network interface; and
a setting module (422), configured to set the NAT type for the network interface.

12. A Media Gateway Controller (MGC), comprising:
a message generating unit (61), configured to generate a Network Address Translation
(NAT) type setting message; and
a message sending unit (62), configured to send the NAT type setting message to a Media Gateway (MG), wherein the NAT type setting message carries a NAT type preset for a network interface.

13. A Network Address Translation (NAT) system, comprising:
a Media Gateway Controller (MGC) (11), configured to generate a NAT type setting message and send the NAT type setting message to a Media Gateway (MG), wherein the NAT type setting message carries a NAT type preset for a network interface; and
the MG (12), configured to receive the NAT type setting message sent by the MGC, and set the NAT type for the network interface according to the NAT type setting message; and perform a NAT operation according to the set NAT type when a NAT device corresponding to the network interface sends a packet from an internal network interface to an external network interface or from an external network interface to an internal network interface.
